# EUROPEAN PATENT SPECIFICATION

(11) **EP 2 180 642 B1**
(45) Date of publication and mention of the grant of the patent: **27.07.2011**
(21) Application number: 08290995.3
(22) Date of filing: 22.10.2008
(51) Int. Cl.: H04L 12/46, H04L 12/56, H04L 12/28

(54) **Source-based and destination-based self-learning forwarding paradigm**
Quellbasiertes und zielbasiertes selbst lernendes weiterleitendes Paradigma
Paradigme de transfert à auto-apprentissage basé sur la source et basé sur la destination

(43) Date of publication of application: 28.04.2010
(73) Proprietor: Alcatel Lucent, 75008 Paris (FR)
(72) Inventor: de Cnodder, Stefaan Jozef, 2018 Antwerpen (BE)
(74) Representative: Narmon, Gisèle Marie Thérèse

(56) References cited:
- EP-A- 1 617 619
- US-B1- 6 446 131

## Description

Local Area Networks (LAN) were originally made up of stations (or hosts) connected to each other via a shared transmission medium. Data are encapsulated into frames, next frames are encoded into physical signals for transmission over the transmission medium (possibly via multiple physical paths). One station at most can be transmitting at a given time, while the other stations are listening. Each station is provided with Medium Access control (MAC), and in particular with signal collision detection, frame delineation, unicast or multicast addressing, and protection against signal corruption.

A repeater (or hub) is a device used to interconnect segments of a transmission medium, thereby extending the range of a LAN when its physical specifications would otherwise be exceeded.

A bridge (or switch) is a device used to interconnect two or more LANS. A bridged LAN can provide for the following:
- communication between stations attached to LANS of different MAC types,
- an increase in the total throughput of a LAN,
- an increase in the physical extent of, or number of permissible attachments to, a LAN,
- partitioning of the physical LAN for engineering or administrative reasons, e.g. by means of virtual LAN (VLAN) tags.

The published European patent application EP1617619 discloses an access node comprising a switching unit for forwarding packets based on the source MAC address contained in said packets.

An example of a bridged LAN with different MAC types and network topology is given in §6.3.2.6 of the document entitled *"IEEE standard for Local and Metropolitan Area Network: overview and Architecture",* ref. 802, published by the Institute of Electrical and Electronics Engineers (IEEE) on March 8, 2002.

The Request For Comment (RFC) entitled *"An Ethernet Address Resolution Protocol",* ref. 826, published in November 1982 by the Internet Engineering Task Force (IETF), discloses a method that allows stations exchanging data over a LAN or a bridged LAN to learn each other's hardware (or physical) address, such as a MAC address, based on their network (or logical) address, such as an IP address. An hardware address uniquely identifies a particular destination or a particular source over a LAN or a bridged LAN. A sending station that wishes to send data to a particular target station, which is assigned a particular network address, broadcasts a request to resolve that particular network address into a hardware address. The station that is assigned that particular network address answers the request with its hardware address. The request further comprises the sending station's network and hardware addresses, thereby allowing the listening stations to learn this association. Once each other's hardware addresses are known, peer-to-peer communication is possible.

The present invention primarily relates to Metropolitan Area Networks (MAN), and further to access (or aggregation) networks that span a geographical area, and provide users with an access towards network service providers and further towards application service providers for a wide variety of end-user applications (or services), such as file transfer, electronic mail, web browsing, voice and video communication, multimedia applications, database access, transaction processing, remote process control, etc.

The present invention more specifically relates to an access node, which is a network unit at the edge of the aggregation network that couples subscribers to the aggregation network, and further to the core network. An example of an access node is a Digital Subscriber Line Access Multiplexer (DSLAM), an optical Network unit (ONU), a wireless base station, etc.

In a Layer 2 (L2) aggregation network, such as an Ethernet MAN (EMAN), the access node accommodates or emulates a bridge. A bridge makes use of the self-learning forwarding paradigm to forward traffic to the right destination: the forwarding table is populated on the fly by decoding the source MAC addresses of incoming frames, and by configuring these MAC addresses as being bound to (or associated with) the respective ports (or interfaces, being of physical or logical nature) through which the incoming frames were received. The association is deleted after some ageing timer expires.

Upon receipt of an incoming frame, the bridge determines the egress port by means of a table lookup with the destination MAC address of that frame. If no match is found, meaning if the destination MAC address has not yet been learned as being bound to a particular port, then the frame is either discarded or broadcast towards all the egress ports, depending on the configured policy.

on account of security issues, an access node may prevent a MAC address that has been learned as being bound to a network port, meaning a port that is coupled to the aggregation network, from being moved to a subscriber port, meaning a port that is coupled to a subscriber device (also referred to as customer premises equipment). This may happen if a malicious user spoofs the MAC address of an edge router by sending some traffic with the edge router's MAC address as source MAC address, such as a fake ARP. conversely, if an edge router's MAC address has been falsely learned as being bound to a subscriber port, then this MAC address is moved back to the network port as soon as some traffic from the edge router is received. Indeed, this situation has to be corrected immediately else the whole user traffic would be forwarded towards that malicious user. Somehow, the network ports have higher precedence than the subscriber ports because they are more trusted.

Those security safeguards cause problems when an upstream packet comes back to the access node as a downstream packet, such as in the following situations:
- There is a short temporary loop in the network by e.g. misconnecting cables or testing optics with loops (connecting the Tx to the Rx).
- There is a misconfiguration in Rapid spanning Tree Protocol (RSTP) of a newly installed access node that causes loops.
- when RTSP commands a switchover from one network interface to another (RSTP can elect a new network interface as being the new root port very fast), an upstream broadcast packet may come back to the access node through the new root port if the broadcast packet is still propagating through the aggregation network during the link switchover.

As a consequence, the end user will undergo service interruption since his MAC address will move from the subscriber port to the network port. The user will not be able to move the MAC address back to the subscriber port because of the aforementioned precedence between subscriber and network ports. The user will have to wait till the MAC address ages on the network port. Typical MAC ageing timers are 5-10 minutes long.

A smaller ageing timer reduces the problem yet at the expenses of the CPU utilisation and/or of the access node scalability (the more addresses to learn, the most critical a small 1 ageing timer). There would still be a service interruption, and MAC address spoofing would get easier (the smaller the ageing timer, the more opportunities for a malicious user to take over someone else's hardware address).

It is an object of the present invention to improve subscriber service outage, while guaranteeing an identical level of security against malicious users.

The objectives of the present invention are achieved and the aforementioned shortcomings of the prior art are overcome by an access node as defined by claim 1, and comprising:
- subscriber interfaces for coupling to subscriber devices,
- at least one network interface for coupling to an aggregation network,
- a forwarding means adapted to forward data units between said subscriber interfaces and said at least one network interface according to a forwarding table,
- a forwarding configuration means adapted, in the event of a first incoming data unit being received through a particular subscriber interface and having a particular hardware address as source hardware address, to encode said particular hardware address into said forwarding table as being associated with said particular subscriber interface,
   and in the event of a further incoming data unit being received through a particular network interface and having said particular hardware address as source hardware address, to re-encode said particular hardware address into said forwarding table as being associated with said particular network interface,
wherein said re-encoding is in dependence of whether a destination hardware address of said further incoming data unit is encoded into said forwarding table as being associated with a subscriber interface or a network interface of said access node.

By conditioning the update of the forwarding table to the destination hardware address of the incoming data unit triggering the update, more specifically by questioning whether that particular destination hardware address has been already learnt as being bound to a network-type or subscriber-type interface, one closely controls the re-assignment of the particular hardware address from the particular subscriber interface to the particular network interface (i.e., the interfaces through which incoming data units with that particular hardware address as source hardware address have been successively received) so as to avoid connection losses for subscribers.

A further embodiment of an access node according to the invention is defined by claim 2, and is characterized in that said forwarding configuration means is further adapted to keep said particular hardware address as being associated with said particular subscriber interface in case of said destination hardware address is associated with said particular network interface.

This situation arises when an upstream data packet with the edge router's hardware address as destination hardware address - the edge router being the first L3 network device on the route towards the core network - comes back as a downstream packet on account of a network mismatch. If so, then the update of the forwarding table is discarded, and the user hardware adress stays attached to the subscriber port.

Still a further embodiment of an access node according to the invention is defined by claim 3, and is characterized in that said forwarding configuration means is further adapted to re-encode said particular hardware address as being associated with said particular network interface in case of said destination hardware address is associated with a subscriber interface of said access node.

This second situation arises when a malicious user spoofed the edge router's hardware address. Should this use case happens, it should be corrected as soon as possible: the edge router's hardware adress is immediately bound back to the network interface.

It is noteworthy that direct L2 user-to-user communication is not allowable in typical L2 access networks on account of the legal framework and/or accounting issues.

Still a further embodiment of an access node according to the invention is defined by claim 4, and is characterized in that said forwarding configuration means is further adapted to keep said particular hardware address as being associated with said particular subscriber interface in case of said destination hardware address is not associated with any interface of said access node.

This may happen for instance if a misconfiguration in RTSP causes an upstream packet to be looped back, while concurrently a topology change is detected and the forwarding tables are cleared.

This third use case also applies to destination broadcast or multicast addresses that are not associated with any port. If such a broadcast or multicast packet is looped back in the aggregation network, the user MAC address stays attached to the subscriber port. The forwarding of the broadcast or multicast packet depends on the configured policy.

Still a further embodiment of an access node according to the invention is defined by claim 5, and is characterized in that said forwarding configuration means is further adapted to re-encode said particular hardware address as being associated with said particular network interface in case of said destination hardware address is associated with a further network interface of said access node.

This fourth situation may arise in a ring topology with two network links in forwarding state mode, and in the event of a malicious user spoofing the edge router's hardware address. This use case can lead to a very dangerous situation if spoofing occurs while downstream traffic from the edge router to the access node switches from a primary network link to a secondary network link on account of a failure along the primary path. Without this rule, the edge router's hardware address would stay attached to the subscriber port. Again, this situation shall be corrected right away and the edge router's hardware address shall be moved back to the newly active network link.

Still a further embodiment of an access node according to the invention is defined by claim 6, and is characterized in that said access node further comprises a loop detection means adapted to detect a loop in said aggregation network, and in that said forwarding configuration means is further adapted to keep said particular hardware address as being associated with said particular subscriber interface in the event of a loop being detected in said aggregation network.

If a loop is detected in the aggregation network then all the hardware addresses that have been learned on the network side are deleted, and as long as the loop is there, hardware addresses that have been learned on subscriber ports do not move to a network port. By pro-actively detecting a loop status in the aggregation network, subscriber connectivity is improved at a further extent.

A loop detection algorithm should not be confused with a loop prevention mechanism like RTSP. A loop detection method could be to monitor how frequently learned MAC addresses are moving from one port to another port.

Any combination of all those embodiments is allowable, and will provide safeguards against specific network threats or network mismatches.

For example, an access node coupled to the aggregation network through a single link, and combining the technical features of claims 1, 2, 3 and 4, achieves a high degree of security and error resilience, the technical features of claims 5 and 6 extends the applicability of the present invention to access nodes that are coupled to the aggregation network through an active link and a backup link (1:1 or N:1 protection schemes in tree or ring topology).

The present invention also relates to a method for configuring a forwarding table in an access node comprising subscriber interfaces for coupling to subscriber devices and at least one network interface for coupling to an aggregation network, said method comprising the steps of:
- in the event of a first incoming data unit being received through a particular subscriber interface and having a particular hardware address as source hardware address, encoding said particular hardware address into said forwarding table as being associated with said particular subscriber interface,
- in the event of a further incoming data unit being received through a particular network interface and having said particular hardware address as source hardware address, re-encoding said particular hardware address into said forwarding table as being associated with said particular network interface,
wherein said re-encoding step is in dependence of whether a destination hardware address of said incoming data unit is associated into said forwarding table with a subscriber interface or a network interface of said access node.

Embodiments of a method according to the invention correspond with the embodiments of an access node according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents an access node according to the invention,
- fig. 2 represents an access node in a tree topology with a single interface for connecting to the aggregation network,
- fig. 3 represents an access node in a tree topology with both an active and a backup interface for connecting to the aggregation network,
- fig. 4 represents access nodes in a ring topology with both primary and secondary interfaces for connecting to the aggregation network.

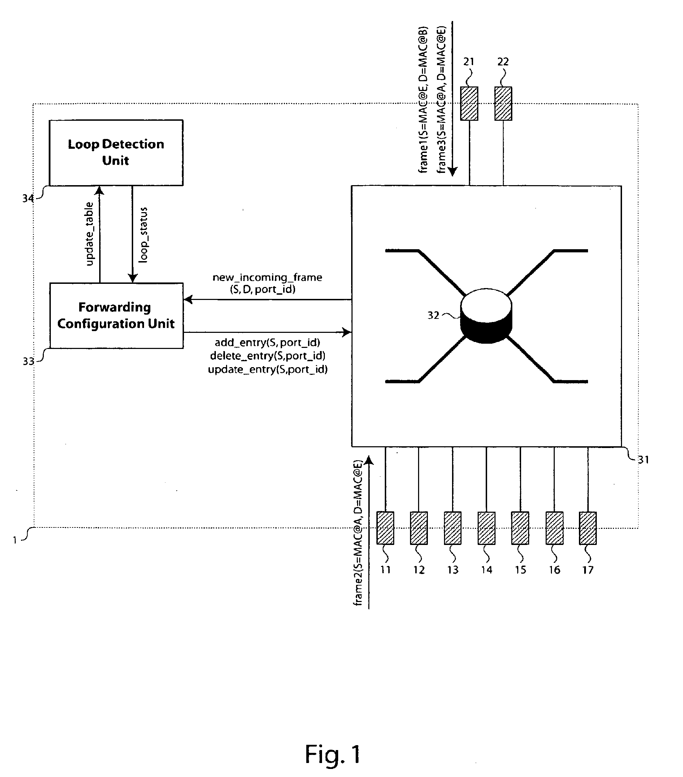

There is seen in fig. 1 an access node 1 comprising:
- subscriber I/O ports 11 to 17 for coupling through wireline or wireless transmission to subscriber devices, such as modems, gateways, routers, set top boxes, personal computers, mobile or wireless terminals, etc,
- network I/O ports 21 and 22 for coupling to a data communication network,
- an Ethernet switch 31 including a forwarding table 32,
- a forwarding configuration unit 33,
- a loop detection unit 34.

The Ethernet switch 31 is coupled to the subscriber ports 11 to 17, to the network ports 21 and 22, and to the forwarding configuration unit 33. The forwarding configuration unit 33 is further coupled to the loop detection unit 34.

The Ethernet switch 31 is adapted to switch any incoming Ethernet frame from any ingress port towards any egress port. Upon receipt of a new incoming frame, the Ethernet switch 31 determines the egress port by means of a table lookup with the destination MAC address of that frame. If no match is found, then the frame is discarded.

The Ethernet switch 31 is further adapted to trigger (see new_incoming_frame(S,D,port_id) message) the forwarding configuration unit 33 whenever a new incoming Ethernet frame has a source MAC address that is not associated yet with the ingress port (that is to say, the port through which the frame has been received). The trigger includes both the source (s) and destination (D) MAC addresses of the incoming frame, as well as a logical identifier of the ingress port (port_id).

The forwarding table 32 maintains one-to-one relationships between learned source MAC addresses and respective port identifiers.

As it will be set forth further in the description, the forwarding configuration unit 33 is adapted to configure the forwarding table 32 based on the following pieces of information as received from the Ethernet switch 31, or as read from the forwarding table 32:
- the source MAC address of an incoming frame,
- the destination MAC address of the incoming frame,
- the identity and the type (subscriber or network type) of the ingress port,
- the identity and the type of the port, which the source MAC address is currently associated with in the forwarding table 32, if any,
- the identity and the type of the port, which the destination MAC address is currently associated with in the forwarding table 32, if any.

The forwarding configuration unit 33 is adapted to configure the forwarding table 32 based on the triggers received from the Ethernet switch 31 and the loop status information received from the loop detection unit 34.

More specifically, the forwarding configuration unit 33 either writes a new forwarding entry (see add_entry(5,port_id) message between the forwarding configuration unit 33 and the Ethernet switch 31) associating a particular source MAC address (S) with a particular port identifier (port id), or delete an existing forwarding entry (see delete_entry(S,port_id) message), or update an existing forwarding entry (see update_entry(s,port_id) message) by re-associating a learned MAC address to another port identifier.

The forwarding configuration unit 33 is further adapted to start an ageing timer whenever a new entry is added or an existing entry is updated, and to delete the corresponding association once this timer expires.

The loop detection unit 34 is adapted to detect a loop condition in the aggregation network. As an example, the loop detection unit 34 counts how frequently learned MAC addresses move from one port to another. To this end, the loop detection unit 34 is notified whenever the forwarding configuration unit 33 updates the forwarding table (see update_table message). once a given threshold is reached, a loop status indication is flagged to the forwarding configuration unit 33 (see loop_status message).

The loop detection unit 34 may also use RTSP status information exchanged between L2 network nodes of the aggregation network 41, as well as link alarm indications generated by the network nodes and propagating throughout the aggregation network 41 (or part of it), so as to infer (or further refine) the current loop status of the aggregation network 41.

An operation of this embodiment follows.

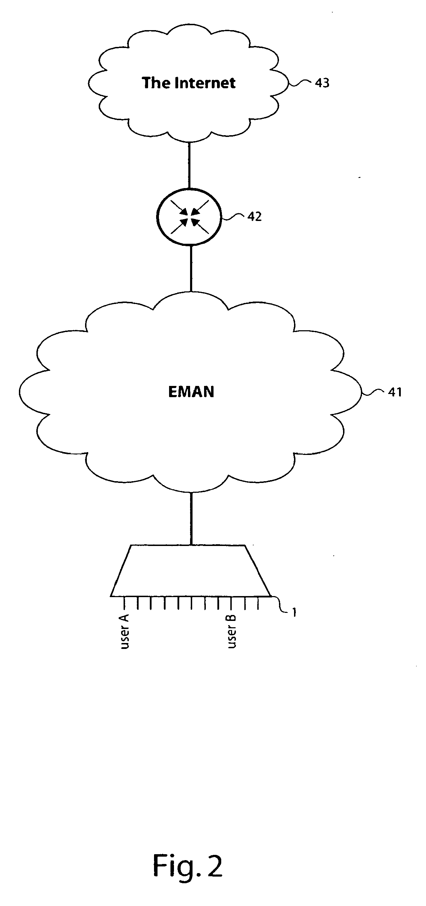

There is seen in fig. 2 a communication network comprising the access node 1, an aggregation network 41 (EMAN), an edge router 42 and the Internet 43. This first use case shows a tree topology wherein the access node 1 is coupled to the aggregation network 41 through a single link.

The aggregation network 41 operates RSTP and configures itself as a loop-free Ethernet network.

Initially, the forwarding table 42 does not comprise any forwarding entry.

A first Ethernet frame frame1 is received through the network port 21 from the edge router 42. The frame frame1 comprises the MAC address MAC@E of the edge router 42 as source MAC address (s), and e.g. the MAC address MAC@B of user B as destination MAC address (D).

As the source MAC address MAC@E is not currently associated with the ingress port 21 in the forwarding table 32, a trigger is sent to the forwarding configuration unit 33 for a table update. The trigger comprises the source MAC address MAC@E (S), the destination MAC address MAC@B (D) and the identifier of port 21 (port_id).

To decide about the update of the forwarding table 32, the forwarding configuration unit 33 checks first whether the source MAC address is currently associated with a subscriber-type interface, and if so, the forwarding configuration unit 33 checks next whether the destination MAC address is currently associated with a subscriber type or network-type interface.

As MAC@E is not associated with any port yet, the forwarding configuration unit 33 writes a first entry in the forwarding table 32 for associating the MAC address MAC@E with the network port 21, and starts a corresponding ageing timer.

Further in time, a new Ethernet frame frame2 is received through the subscriber port 11 from user A. The frame frame2 comprises the MAC address of user A MAC@A as source MAC address, and the MAC address of the edge router 42 MAC@E as destination MAC address.

As the source MAC address MAC@A is not currently associated with the ingress port 11 in the forwarding table 32, the Ethernet switch 31 sends a trigger to the forwarding configuration unit 33 for a table update. The trigger comprises the source MAC address MAC@A, the destination MAC address MAC@E and the identifier of port 11.

As the source MAC address MAC@A is not associated with any port yet, the forwarding configuration unit 33 writes a new entry in the forwarding table 32 for associating MAC@A with the port 11, and starts a corresponding ageing timer.

Still further in time, a new Ethernet frame frame3 is received through the network port 21. The frame frame3 comprises the MAC address MAC@A of user A as source MAC address, and the MAC address MAC@E of the edge router 42 as destination MAC address. Actually, the frame frame3 is an upstream frame from user A that has been looped back to the access node 1 on account of a network mismatch in the aggregation network 41.

As the source MAC address MAC@A is not currently associated with the ingress port 21 in the forwarding table 32, the Ethernet switch 31 sends a trigger to the forwarding configuration unit 33 for a table update. The trigger comprises the source MAC address MAC@A, the destination MAC address MAC@E and the identifier of port 21.

As MAC@A is currently associated with the subscriber port 11, the forwarding configuration unit 33 checks next whether the destination MAC address MAC@E is associated with a subscriber-type or network type interface. As MAC@E is currently associated with the network port 21, the forwarding configuration unit 33 discards the update of the forwarding table and leaves MAC@A as being associated with the subscriber port 11, which is the expected behaviour.

Let us assume now that a malicious user, e.g. user B, spoofs the MAC address MAC@E of the edge router 42, that is to say that MAC@E is wrongly associated in the forwarding table 32 with a subscriber port, e.g. the subscriber port 15 which user B is coupled to.

Once a subsequent frame bound to any user, e.g. user A, is received from the edge router 42 through the network port 21, MAC@E will be moved back to the network port 21.

indeed, as the source MAC address MAC@E is not associated with the ingress port, the Ethernet switch 31 will trigger the forwarding configuration unit 33 for a table update.

Next and according to the invention, as the source MAC address MAC@E is currently associated with a subscriber type interface, and as the destination MAC address MAC@A is currently associated with a subscriber-type interface, the forwarding configuration unit 33 will re-encode MAC@E as being associated with the network port 21, which is again the expected behaviour.

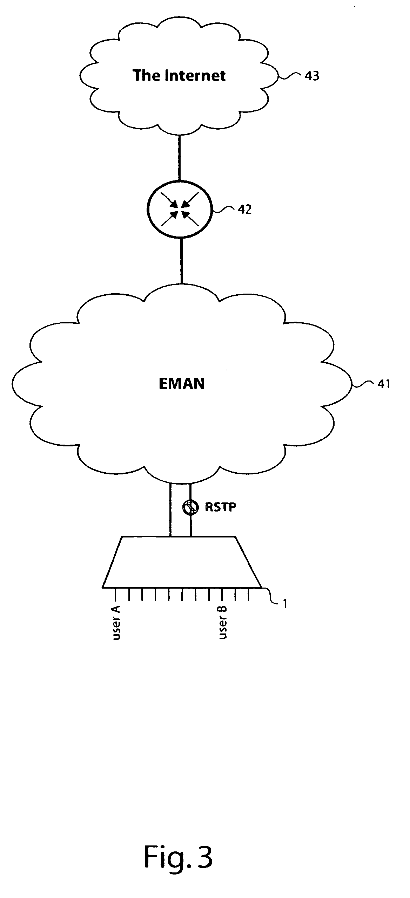

There is seen in fig. 3 a communication network comprising the access node 1, an aggregation network 41 (EMAN), an edge router 42 and the Internet 43. This second use case shows a tree topology wherein the access node 1 is coupled to the aggregation network 41 through both an active and a backup link. The active link is in forwarding state, while the back up link is blocked.

This use case is mostly identical to the first use case, yet a new situation arises if an upstream packet is looped back to the access node 1 while a switchover from the active link to the backup link takes place.

To illustrate this second use case, let us assume that, at an earlier time, the network port 21 was in forwarding state and the network port 22 was blocked, and that, because of a topology change, RTSP commands a switchover from the network port 21 to the network port 22, meaning the network port 22 is from now on the new active port. As a consequence, all the entries associated with the network port 21 are cleared. Let us assume next that an upstream looped frame, such as the Ethernet frame frame3, is received through the network port 22.

As the source MAC address MAC@A is not currently associated with the ingress port 22 in the forwarding table 32, the Ethernet switch 31 sends a trigger to the forwarding configuration unit 33 for a table update. The trigger comprises the source MAC address MAC@A, the destination MAC address MAC@E and the identifier of port 22.

As MAC@A is currently associated with the subscriber port 11, the forwarding configuration unit 33 checks next whether the destination MAC address MAC@E is associated with a subscriber-type or network type interface. As MAC@E is not associated with any interface, the forwarding configuration unit 33 discards the update of the forwarding table 32 and keep MAC@A as being associated with the subscriber port 11, which is still the expected behaviour.

Let us assume next that user B was able to steal the MAC address of the edge router 42 just after the switchover, that is to say that MAC@E is wrongly associated with the subscriber port 15 in the forwarding table 32.

if so, then the first downstream frame from the edge router 42 bound to e.g. user A will force MAC@E to be moved back from the subscriber port 15 to the network port 22 since the destination address of that frame, presently MAC@A, is currently associated with a subscriber port, presently the subscriber port 11. Again, this is the expected behaviour.

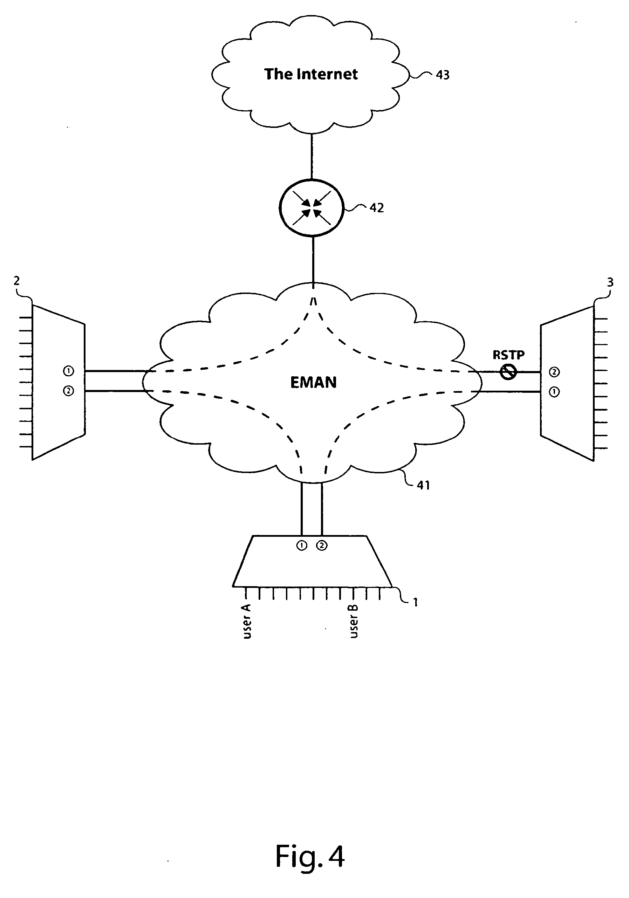

There is seen in fig. 4 a third use case wherein the access nodes 1, 2 and 3 are coupled to the aggregation network 41 by means of a ring.

The counterclockwise direction along the ring is referred to as the primary direction and the clockwise direction along the ring is referred as the secondary direction, so are the network ports that are used for coupling the access nodes 1, 2 and 3 to the ring (see ① and ② for respective ones of the access nodes). The network ports 21 and 22 of the access node 1 are assumed to be the primary and secondary ports respectively.

Initially, traffic from the edge router 42 flows along the ring through the primary direction towards the access nodes 2, next 1 and next 3. The secondary network port of the access node 3 is in blocked state, while all the other primary and secondary network ports are in forwarding state.

A switchover from the primary port to the secondary port is assumed to happen because of a failure somewhere along the ring. It will be further assumed that, on account of the ring RTSP reconfiguration, the primary network port of the access node 2 switches to blocked state, the secondary port of the access node 3 switches to forwarding state, while all the other primary and secondary network ports remain in forwarding state, including the network ports 21 and 22. From the switchover time onwards, traffic from the edge router 42 flows along the secondary direction towards the access nodes 3, next 1 and next 2.

Let us assume that an upstream packet from e.g. user A, such as the Ethernet frame frame3, is looped back in the aggregation network 41 towards the access node 1 while the switchover takes place, and is received by the access node 1 through its secondary port 22. contrary to the previous use case, source MAC addresses that have been learned as being associated with network port 21 are not cleared, and the current associations remain alive.

Let us examine this situation more closely. As the source MAC address MAC@A is not currently associated with the ingress port 22 in the forwarding table 32, the Ethernet switch 31 sends a trigger to the forwarding configuration unit 33 for a table update. The trigger comprises the source MAC address MAC@A, the destination MAC address MAC@E and the identifier of port 22.

As MAC@A is currently associated with the subscriber port 11, the forwarding configuration unit 33 checks next whether the destination MAC address MAC@E is associated with a subscriber-type or network type interface. As MAC@E is currently associated with the primary network port 21, the forwarding configuration unit 33 accepts the update of the forwarding table and move MAC@A to the secondary port 22, which is not the expected behaviour.

To palliate this issue, the loop detection unit 34 prevents such a wrong update by pro-actively detecting the loop status in the ring operation, and by preventing the source MAC address MAC@A to be moved to the network port, presently the secondary port 22.

somehow, the loop status such as detected by the loop detection unit 34 has higher precedence over the aforementioned source-and-destination address based rules, and may prevent any unnecessary re-assignment of subscriber hardwares adresses from subscriber ports to network ports in a few tricky use cases that may still happen.

Eventually, if e.g. user B was able to spoof the edge router's MAC address in this third use case, the first downstream packet from the edge router 42 towards e.g. user A will correct this situation as it was set forth above for the redundant tree topology.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. **An access node** (1) comprising:
- **subscriber interfaces** (11 to 17) for coupling to subscriber devices,
- **at least one network interface** (21, 22) for coupling to an **aggregation network** (41),
- **a forwarding means** (31) adapted to forward data units between said subscriber interfaces and said at least one network interface according to **a forwarding table** (32),
- **a forwarding configuration means** (33) adapted, in the event of **a first incoming data unit** (frame2) being received through **a particular subscriber interface** (11) and having **a particular hardware address** (S=MAC@A) as source hardware address, to encode said particular hardware address into said forwarding table as being associated with said particular subscriber interface,
and in the event of **a further incoming data unit** (frame3) being received through **a particular network interface** (21) and having said particular hardware address as source hardware address, to re-encode said particular hardware address into said forwarding table as being associated with said particular network interface,
***characterized in that*** said re-encoding is in dependence of whether **a destination hardware address** (D=MAC@E) of said further incoming data unit is encoded into said forwarding table as being associated with a subscriber interface or a network interface of said access node.

2. **An access node** (1) according to claim 1, ***characterized in that*** said forwarding configuration means is further adapted to keep said particular hardware address as being associated with said particular subscriber interface in case of said destination hardware address is associated with said particular network interface.

3. **An access node** (1) according to any of the preceding claims, ***characterized in that*** said forwarding configuration means is further adapted to re-encode said particular hardware address as being associated with said particular network interface in case of said destination hardware address is associated with a subscriber interface of said access node.

4. **An access node** (1) according to any of the preceding claims, ***characterized in that*** said forwarding configuration means is further adapted to keep said particular hardware address as being associated with said particular subscriber interface in case of said destination hardware address is not associated with any interface of said access node.

5. **An access node** (1) according to any of the preceding claims, ***characterized in that*** said forwarding configuration means is further adapted to re-encode said particular hardware address as being associated with said particular network interface in case of said destination hardware address is associated with **a further network interface** (22) of said access node.

6. **An access node** (1) according to any of the preceding claims, ***characterized in that*** said access node further comprises a loop detection means (34) adapted to detect a loop in said aggregation network,
*and **in that*** said forwarding configuration means is further adapted to keep said particular hardware address as being associated with said particular subscriber interface in the event of a loop being detected in said aggregation network.

7. **A method** for configuring **a forwarding table** (32) in **an access node** (1) comprising **subscriber interfaces** (11 to 17) for coupling to subscriber devices and **at least one network interface** (21, 22) for coupling to **an aggregation network** (41), said method comprising the steps of:
- in the event of **a first incoming data unit** (frame2) being received through **a particular subscriber interface** (11) and having **a particular hardware address** (S=MAC@A) as source hardware address, encoding said particular hardware address into said forwarding table as being associated with said particular subscriber interface,
- in the event of **a further incoming data unit** (frame3) being received through **a particular network interface** (21) and having said particular hardware address as source hardware address, re-encoding said particular hardware address into said forwarding table as being associated with said particular network interface,
***characterized in that*** said re-encoding step is in dependence of whether **a destination hardware address** (D=MAC@E) of said incoming data unit is associated into said forwarding table with a subscriber interface or a network interface of said access node.

## Patentansprüche

1. **Zugangsknoten** (1), umfassend:
- **Teilnehmerschnittstellen** (11 bis 17) zum Koppeln an Teilnehmergeräte,
- **mindestens eine Netzwerkschnittstelle** (21, 22) zum Koppeln an ein **Zusammenfassungsnetzwerk** (41),
- ein **Weiterleitungsmittel** (31), welches für das Weiterleiten von Dateneinheiten zwischen den besagten Teilnehmerschnittstellen und der besagten mindestens einen Netzwerkschnittstelle gemäß **einer Weiterleitungstabelle** (32) ausgelegt ist,
- **ein Weiterleitungskonfigurationsmittel** (33), welches dazu ausgelegt ist, im Fall **einer ersten eingehenden Dateneinheit** (frame2), welche über **eine bestimmte Teilnehmerschnittstelle** (11) empfangen wird und **eine bestimmte Hardware-Adresse** (S=MAC@A) als Quell-Hardware-Adresse aufweist, die besagte bestimmte Hardware-Adresse als mit der bestimmten Teilnehmerschnittstelle assoziiert in die besagte Weiterleitungstabelle zu codieren,
und im Fall **einer weiteren eingehenden Dateneinheit** (frame3), welche über **eine bestimmte Netzwerkschnittstelle** (21) empfangen wird und die besagte Hardware-Adresse als Quell-Hardware-Adresse aufweist, die besagte bestimmte Hardware-Adresse als mit der besagten bestimmten Netzwerkschnittstelle assoziiert in die besagte Weiterleitungstabelle zu recodieren,
***dadurch gekennzeichnet, dass*** das besagte Recodieren davon abhängt, ob **eine Ziel-Hardware-Adresse** (D=MAC@E) der besagten weiteren eingehenden Dateneinheit als mit einer Teilnehmerschnittstelle oder einer Netzwerkschnittstelle des besagten Zugangsknotens assoziiert in die besagte Weiterleitungstabelle codiert worden ist.

2. **Zugangsknoten** (1) nach Anspruch 1,
***dadurch gekennzeichnet, dass*** das besagte Weiterleitungskonfigurationsmittel weiterhin dazu ausgelegt ist, die besagte bestimmte Hardware-Adresse als mit der bestimmten Teilnehmerschnittstelle assoziiert zu führen, wenn die besagte Ziel-Hardware-Adresse mit der besagten bestimmten Netzwerkschnittstelle assoziiert ist.

3. **Zugangsknoten** (1) nach einem beliebigen der vorstehenden Ansprüche,
***dadurch gekennzeichnet, dass*** das besagte Weiterleitungskonfigurationsmittel weiterhin dazu ausgelegt ist, die besagte bestimmte Hardware-Adresse als mit der bestimmten Netzwerkschnittstelle assoziiert zu recodieren, wenn die besagte Ziel-Hardware-Adresse mit einer Teilnehmerschnittstelle des besagten Zugangsknoten assoziiert ist.

4. **Zugangsknoten** (1) nach einem beliebigen der vorstehenden Ansprüche,
***dadurch gekennzeichnet, dass*** das besagte Weiterleitungskonfigurationsmittel weiterhin dazu ausgelegt ist, die besagte bestimmte Hardware-Adresse als mit der bestimmten Teilnehmerschnittstelle assoziiert zu führen, wenn die besagte Ziel-Hardware-Adresse nicht mit einer beliebigen Schnittstelle des besagten Zugangsknoten assoziiert ist.

5. **Zugangsknoten** (1) nach einem beliebigen der vorstehenden Ansprüche,
***dadurch gekennzeichnet, dass*** das besagte Weiterleitungskonfigurationsmittel weiterhin dazu ausgelegt ist, die besagte bestimmte Hardware-Adresse als mit der bestimmten Netzwerkschnittstelle assoziiert zu recodieren, wenn die besagte Ziel-Hardware-Adresse mit **einer weiteren Netzwerkschnittstelle** (22) des besagten Zugangsknoten assoziiert.

6. **Zugangsknoten** (1) nach einem beliebigen der vorstehenden Ansprüche,
***dadurch gekennzeichnet, dass*** der besagte Zugangsknoten weiterhin **ein Mittel zur Schleifendetektion** (34) umfasst, welches dazu ausgelegt ist, eine Schleife in dem besagten Zusammenfassungsnetzwerk zu erkennen,
*und dass* das besagte Weiterleitungskonfigurationsmittel weiterhin dazu ausgelegt ist, die besagte bestimmte Hardware-Adresse als mit der bestimmten Teilnehmerschnittstelle assoziiert zu führen, wenn in dem besagten Zusammenfassungsnetzwerk eine Schleife erkannt wird.

7. **Verfahren** zum Konfigurieren **einer Weiterleitungstabelle** (32) in **einem Zugangsknoten** (1) mit **Teilnehmerschnittstellen** (11 bis 17) zum Koppeln an Teilnehmergeräte, und **mindestens einer Netzwerkschnittstelle** (21, 22) zum Koppeln an ein **Zusammenfassungsnetzwerk** (41), wobei das Verfahren die folgenden Schritte umfasst:
- wenn **eine erste eingehende Dateneinheit** (frame2) mit **einer bestimmten Hardware-Adresse** (S=MAC@A) als Quell-Hardware-Adresse über **eine bestimmte Teilnehmerschnittstelle** (11) empfangen wird, Codieren der besagten bestimmten Hardware-Adresse in die besagte Weiterleitungstabelle als mit der besagten bestimmten Teilnehmerschnittstelle assoziiert,
- wenn **eine weitere eingehende Dateneinheit** (frame3) mit der besagten bestimmten Hardware-Adresse als Quell-Hardware-Adresse über **eine bestimmte Netzwerkschnittstelle** (21) empfangen wird, Recodieren der besagten bestimmten Hardware-Adresse in die besagte Weiterleitungstabelle als mit der besagten bestimmten Netzwerkschnittstelle assoziiert,
***dadurch gekennzeichnet, dass*** der besagte Schritt des Recodierens davon abhängt, ob **eine Ziel-Hardware-Adresse** (D=MAC@E) der besagten eingehenden Dateneinheit in der besagten Weiterleitungstabelle mit einer Teilnehmerschnittstelle oder einer Netzwerkschnittstelle des besagten Zugangsknotens assoziiert ist.

## Revendications

1. **Noeud d'accès** (1) comprenant :
- **des interfaces d'abonné** (11 à 17) pour la connexion aux périphériques d'abonné,
- **au moins une interface de réseau** (21, 22) pour la connexion à **un réseau d'agrégation** (41),
- **des moyens de transfert** (31) adaptés pour transférer les unités de données entre lesdites interfaces d'abonné et ladite au moins une interface de réseau conformément à une **table de transfert** (32),
- **des moyens de configuration du transfert** (33) adaptés, dans le cas où une **première unité de données entrante** (frame2) est reçue par le biais d'une **interface d'abonné particulière** (11) et possède **une adresse physique particulière** (S=MAC@A) comme adresse physique de source, pour coder ladite adresse physique particulière dans ladite table de transfert comme étant associée à ladite interface d'abonné particulière,
- et dans le cas où une **unité de données entrante supplémentaire** (frame3) est reçue par le biais d'une **interface de réseau particulière** (21) et possède ladite adresse physique particulière en tant qu'adresse physique de source, pour réencoder ladite adresse physique particulière dans ladite table de transfert comme étant associée à ladite interface de réseau particulière,
***caractérisé en ce que*** ledit réencodage s'effectue suivant qu'une **adresse physique de destination** (D=MAC@E) de ladite unité de données entrante supplémentaire est codée dans ladite table de transfert comme étant associée à une interface d'abonné ou à une interface de réseau dudit noeud d'accès.

2. **Noeud d'accès** (1) selon la revendication 1,
***caractérisé en ce que*** lesdits moyens de configuration du transfert sont en outre adaptés pour conserver ladite adresse physique particulière comme étant associée à ladite interface d'abonné particulière dans le cas où ladite adresse physique de destination est associée à ladite interface de réseau particulière.

3. **Noeud d'accès** (1) selon l'une quelconque des revendications précédentes, ***caractérisé en ce que*** lesdits moyens de configuration du transfert sont en outre adaptés pour réencoder ladite adresse physique particulière comme étant associée à ladite interface de réseau particulière dans le cas où ladite adresse physique de destination est associée à une interface d'abonné dudit noeud d'accès.

4. **Noeud d'accès** (1) selon l'une quelconque des revendications précédentes, ***caractérisé en ce que*** lesdits moyens de configuration du transfert sont en outre adaptés pour maintenir ladite adresse physique particulière comme étant associée à ladite interface de réseau particulière dans le cas où ladite adresse physique de destination n'est pas associée à une quelconque interface d'abonné dudit noeud d'accès.

5. **Noeud d'accès** (1) selon l'une quelconque des revendications précédentes, ***caractérisé en ce que*** lesdits moyens de configuration du transfert sont en outre adaptés pour réencoder ladite adresse physique particulière comme étant associée à ladite interface de réseau particulière dans le cas où ladite adresse physique de destination est associée à **une interface de réseau supplémentaire** (22) dudit noeud d'accès.

6. **Noeud d'accès** (1) selon l'une quelconque des revendications précédentes, ***caractérisé en ce que*** ledit noeud d'accès comprend en outre **des moyens de détection de boucle** (34) adaptés pour détecter une boucle dans ledit réseau d'agrégation,
*et **en ce que*** lesdits moyens de configuration du transfert sont en outre adaptés pour maintenir ladite adresse physique particulière comme étant associée à ladite interface d'abonné particulière dans le cas où une boucle est détectée dans ledit réseau d'agrégation.

7. **Procédé** pour configurer **une table de transfert** (32) dans **un noeud d'accès** (1) comprenant des **interfaces d'abonné** (11 à 17) pour connecter des périphériques d'abonné et **au moins une interface de réseau** (21, 22) pour la connexion à un **réseau d'agrégation** (41), ledit procédé comprenant les étapes suivantes :
- dans le cas où une **première unité de données entrante** (frame2) est reçue par le biais d'une **interface d'abonné particulière** (11) et possède **une adresse physique particulière** (S=MAC@A) comme adresse physique de source, codage de ladite adresse physique particulière dans ladite table de transfert comme étant associée à ladite interface d'abonné particulière,
- dans le cas où une **unité de données entrante supplémentaire** (frame3) est reçue par le biais d'une **interface de réseau particulière** (21) et possède ladite adresse physique particulière en tant qu'adresse physique de source, réencodage de ladite adresse physique particulière dans ladite table de transfert comme étant associée à ladite interface de réseau particulière,
***caractérisé en ce que*** ladite étape de réencodage s'effectue suivant qu'une **adresse physique de destination** (D=MAC@E) de ladite unité de données entrante supplémentaire est associée dans ladite table de transfert à une interface d'abonné ou à une interface de réseau dudit noeud d'accès.
